# EUROPEAN PATENT APPLICATION

(11) **EP 4 618 351 A1**
(43) Date of publication of application: **17.09.2025**
(21) Application number: 23889212.9
(22) Date of filing: 10.11.2023
(51) Int. Cl.: H02J 3/32, H02J 3/38, H02J 7/35

(54) **POWER CONVERSION DEVICE**

(30) Priority: 11.11.2022 KR 20220151024; 09.11.2023 KR 20230154913
(71) Applicant: LG INNOTEK CO. LTD, Gangseo-gu Seoul 07796 (KR)
(72) Inventor: PARK, Heo Kyoung, Seoul 07796 (KR); LEE, Jong Hyun, Seoul 07796 (KR); JUNG, Da Ul, Seoul 07796 (KR)
(74) Representative: DREISS Patentanwälte PartG mbB
(86) International application number: PCT/KR2023/018091
(87) International publication number: WO 2024/101956

(57) **Abstract**

A power conversion device according to one embodiment of the present invention comprises: an input unit which is connected to a DC link end, and which receives voltage and current of the DC link end; a power conversion unit for converting the voltage of the DC link end; an output unit for outputting the converted voltage; and a control unit, which compares the voltage of the DC link end to a reference voltage, uses the difference between the voltage of the DC link end the reference voltage so as to control the power conversion unit, and uses the current of the DC link end according to operation of the power conversion unit so as to adjust the reference voltage.

## Description

### [Technical Field]

The present invention relates to a power conversion device, and more specifically, to a power conversion device having a stable voltage at the DC link.

### [Background Art]

Electric energy is widely used because it is easy to convert and transmit. In order to use such electric energy efficiently, an energy storage system (ESS) is used. The energy storage system receives power and charges the battery. In addition, the energy storage system discharges the power charged in the battery when power is needed to supply power. Through this, the energy storage system enables power to be supplied flexibly.

Specifically, when the power supply system includes an energy storage system, it operates as follows. The energy storage system discharges the electrical energy stored in the battery when the load or the system is overloaded. Also, when the load or the system is lightly loaded, the energy storage system receives power from the power generation unit or the system and charges the battery.

Additionally, the energy storage system charges the battery by receiving idle power from an external power source if the energy storage system exists independently regardless of the power supply system. Additionally, when the grid or load is overloaded, the energy storage system supplies power by discharging the power charged from the battery.

These energy storage systems perform droop control to improve stability during the charging or discharging operation of the battery. In particular, the energy storage system performs droop control according to the state of charge (SOC) of the battery. However, the existing droop control method has a disadvantage in that the operating point of the DC/DC converter changes only along the fixed droop curve because the charge/discharge voltage and the droop curve are fixed. In addition, there is a problem in that the power output is fixed to 0 in the idle section, so that a non-responsive section occurs when the voltage drops or rises. In addition, there is a problem in that when the link voltage is located within the charging voltage section, discharging and idle operation are not possible, and when it is located within the discharging voltage section, charging and idle operation are impossible, and charging and discharging are impossible in the idle section.

### [Detailed Description of the Invention]

### [Technical Subject]

The technical problem to be solved by present invention is to provide a power conversion device in which the voltage of the DC link is stable.

### [Technical Solution]

In order to solve the above technical problem, a power conversion device according to one embodiment of the present invention comprises: an input unit which is connected to a DC link, and which receives voltage and current of the DC link; a power conversion unit for converting the voltage of the DC link; an output unit for outputting the converted voltage; and a control unit, which compares the voltage of the DC link to a reference voltage, uses the difference between the voltage of the DC link the reference voltage so as to control the power conversion unit, and uses the current of the DC link according to operation of the power conversion unit so as to adjust the reference voltage.

In addition, the control unit can repeat adjustment of the reference voltage until the difference between the voltage of the DC link and the reference voltage becomes 0 or within a predetermined range.

In addition, devices being connected to the DC link operate in droop control in which power is controlled according to the voltage of the DC link, and the reference voltage may be an input of a droop control curve of the droop control.

In addition, the output unit is connected to a battery, and the control unit can control the power conversion unit to charge or discharge the battery.

In addition, the control unit can calculate the amount of power to charge or discharge the battery by using the difference between the voltage of the DC link and the reference voltage.

In addition, the control unit can limit the operation of the power conversion unit within a predetermined power range.

In addition, the initial reference voltage can be set to a voltage at which the devices connected to the DC link are neither charged nor discharged.

In addition, the control unit can adjust the reference voltage when the voltage or current of the DC link changes according to changes in the charging power or discharging power of devices connected to the DC link.

In order to solve the above technical problem, a solar power generation system according to an embodiment of the present invention comprises: a DC link; a solar power generation module being connected to the DC link; an inverter being connected between the DC link and a grid; and one or more DC-DC converters being connected between the DC link and a battery, wherein the devices connected to the DC link operate in droop control in which power is controlled according to a reference voltage, and the DC-DC converter compares the voltage of the DC link with a reference voltage when power of any one of the devices connected to the DC link changes, charges or discharges the battery using a difference between the voltage of the DC link and the reference voltage, and adjusts the reference voltage using a current of the DC link according to charging/discharging of the battery.

In addition, the DC-DC converter can repeat adjustment of the reference voltage until the difference between the voltage of the DC link and the reference voltage becomes 0 or within a predetermined range.

### [Advantageous Effects]

According to embodiments of the present invention, the voltage of the DC link can perform a stable droop control. In addition, since the link end voltage is tracked according to the droop curve according to the power consumed (supplied) by the inverter, and the like, parallel operation with other power conversion devices is possible. Since the voltage operating point that tracks the link voltage is controlled through voltage control, the link end voltage is stabilized compared to the case where only a current controller exists.

### [Brief Description of Drawings]

FIG. 1 is a block diagram of a power conversion device according to an embodiment of the present invention.
FIG. 2 is a block diagram of a solar power generation system according to an embodiment of the present invention.
FIG. 3 illustrates the connection relationship of each component of a solar power generation system according to an embodiment of the present invention.
FIGS. 4 to 11 are drawings for explaining a power conversion device according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

A modified embodiment according to the present embodiment may include some components of each embodiment and some components of other embodiments together. That is, the modified embodiment may include one embodiment among various embodiments, but some components may be omitted and some components of the corresponding other embodiment may be included. Or, it may be the opposite. The features, structures, effects, and the like to be described in the embodiments are included in at least one embodiment, and are not necessarily limited to only one embodiment. Furthermore, the features, structures, effects, and the like exemplified in each embodiment may be combined or modified and implemented in other embodiments by a person having ordinary knowledge in the field to which the embodiments belong. Therefore, the contents related to such combinations and modifications should be interpreted as being included in the scope of the embodiment.

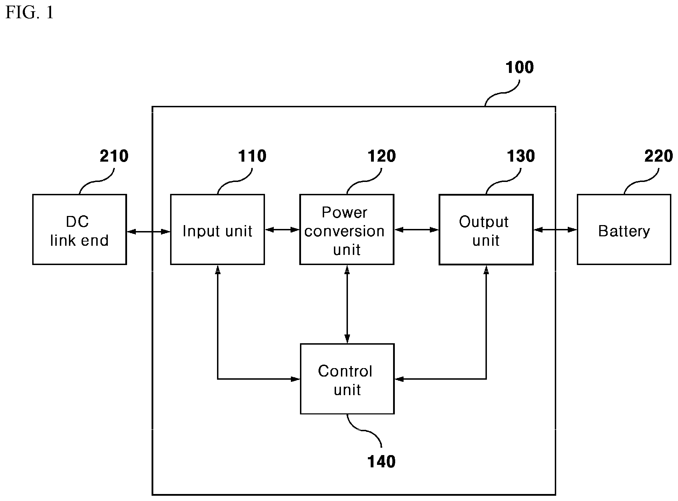

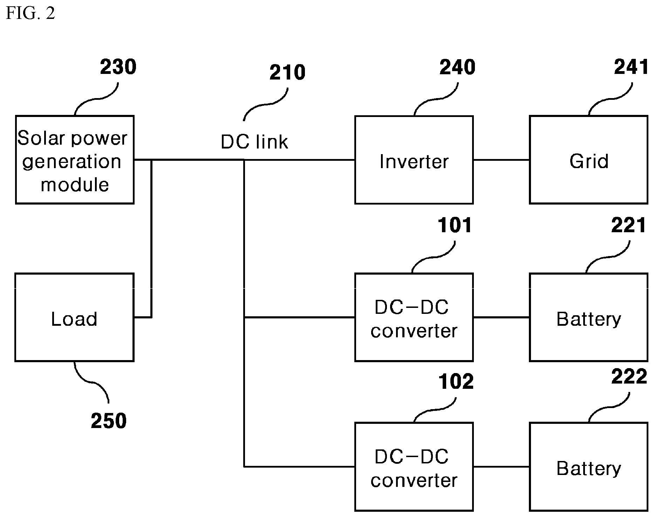

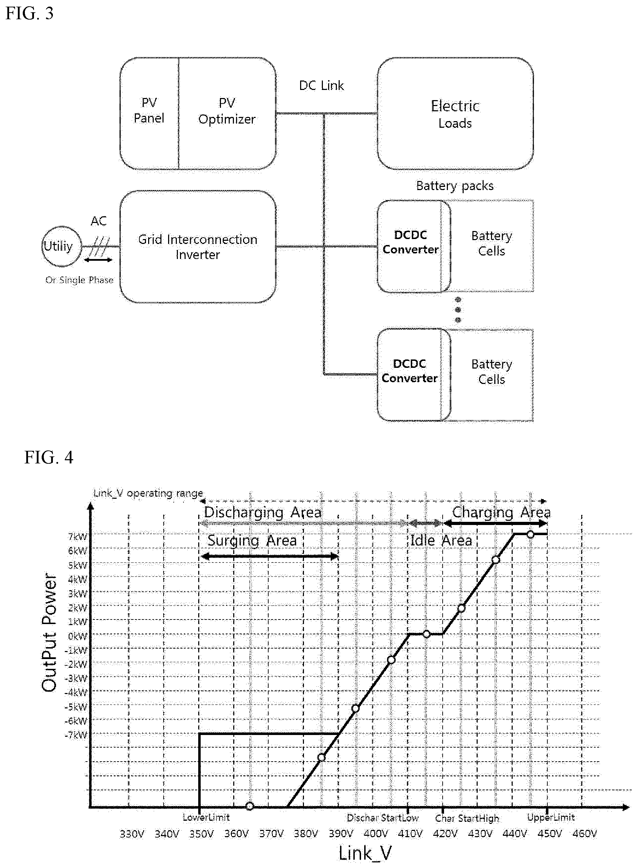

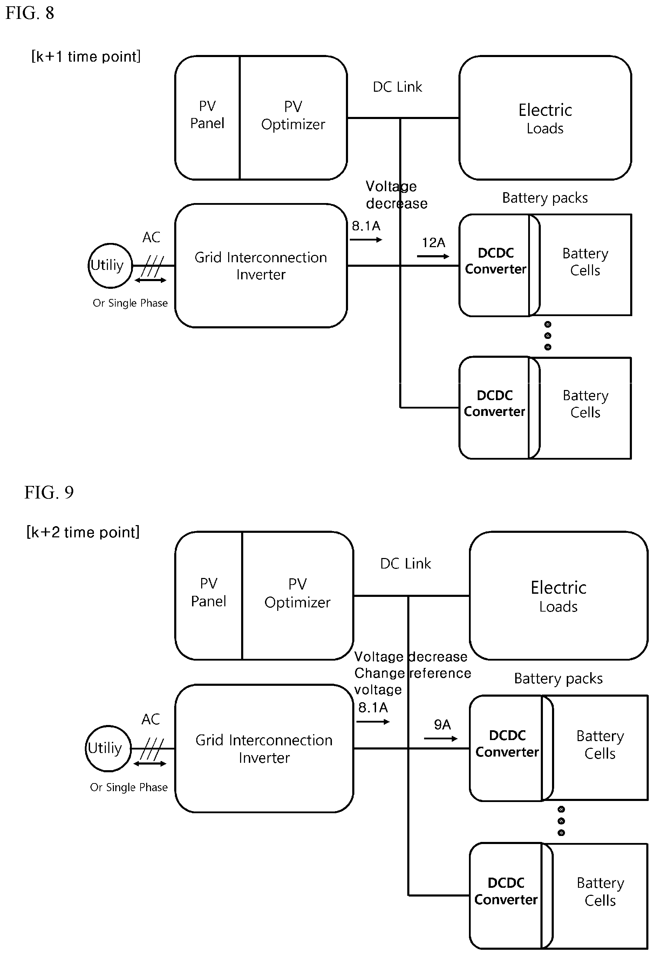

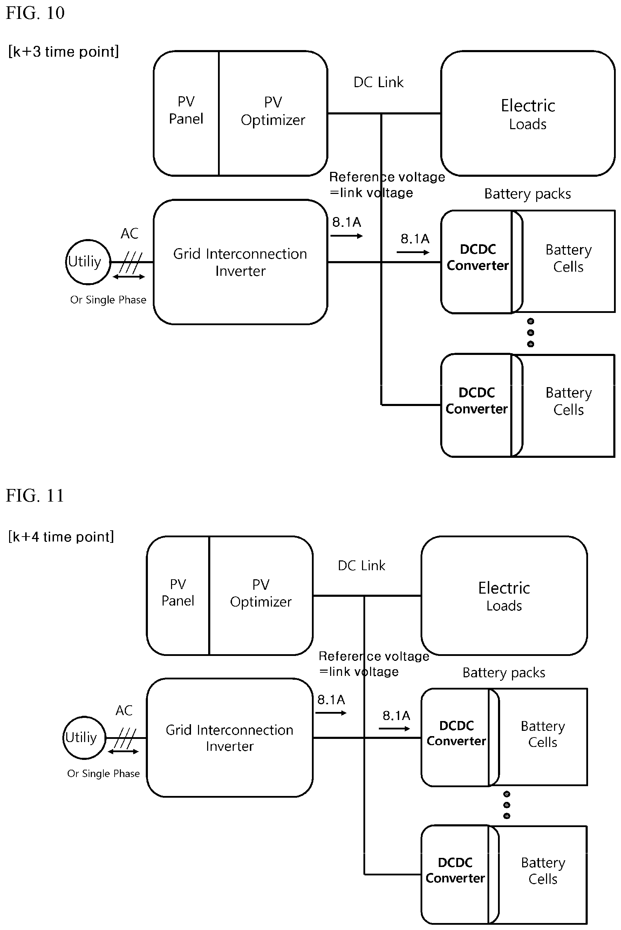

FIG. 1 is a block diagram of a power conversion device according to an embodiment of the present invention. FIG. 2 is a block diagram of a solar power generation system according to an embodiment of the present invention; FIG. 3 illustrates a connection relationship of each component of a solar power generation system according to an embodiment of the present invention; and FIGS. 4 to 11 are drawings for explaining a power conversion device according to an embodiment of the present invention.

A power conversion device **100** according to an embodiment of the present invention comprises: an input unit **110,** a power conversion unit **120,** an output unit **130,** and a control unit **140.**

The power conversion device **100** according to an embodiment of the present invention is connected to a DC link **210** as shown in FIG. 2, and may be connected in parallel with a solar power generation module **230,** an inverter **240,** another power conversion device **100,** a load **250,** and the like. An input unit **110** is connected to the DC link **210** and receives voltage and current of the DC link **210.**

The input unit **110** is connected to the DC link **210** and can receive the voltage of the DC link **210** or receive a signal for detecting the voltage or current of the DC link **210.** The voltage of the DC link may be the voltage of a DC link capacitor connected to the DC link. A detection unit (not shown) for detecting the voltage or current of the DC link **210** may be included.

The power conversion unit **120** converts the voltage of the DC link being inputted to the input unit **110.**

The power conversion unit **120** is a device that converts a power being inputted and outputs it, and may be a converter. It may be a boost converter that increases voltage, a buck converter that decreases voltage and a buck-boost converter that increases or decreases voltage. It may be a DC-DC converter that converts a direct current to a direct current. It may include various devices that convert power, voltage, and current.

The output unit **130** outputs the voltage converted to the power conversion unit **120.**

The output unit **130** can be connected to a battery **220,** and the power conversion unit **120** can charge or discharge the battery **220.** The power conversion unit **120** can convert power of the DC link **210** to charge the battery **220,** or convert power stored in the battery **220** and output it to the DC link **210.** When converting power of the battery **220** and outputting it to the DC link **210,** the output unit **130** operates as an input unit to which the battery voltage is applied, and the input unit **110** can operate as an output unit. The power conversion unit **120** can include a battery DC-DC converter and a battery management system (BMS, battery monitoring system).

The control unit **140** controls the operation of the power conversion unit **120** according to the DC link voltage of the DC link **220** being connected to the power conversion unit **120.** The control unit **140** compares the voltage of the DC link with the reference voltage, and controls the power conversion unit **120** using the difference between the voltage of the DC link and the reference voltage. When the power conversion unit **120** operates, the reference voltage can be adjusted using the current of the DC link.

The control unit **140** can control the power to be charged or discharged from the battery **220** by performing droop control on the power conversion unit **120** according to the voltage of the DC link. The control unit **140** performs droop control when controlling the power conversion operation of the power conversion unit **120.** Droop control is a control method that prevents excessive output and maintains a constant output, and utilizes the characteristic that the frequency of the output voltage drops when the effective power being outputted from the converter increases and the characteristic that the size of the output voltage drops when the reactive power being outputted increases. This control method is called load sharing control. The control unit **140** can control the operation of the power conversion unit **120** according to the size of the voltage of the DC link to charge or discharge the battery **220.**

As shown in FIG. 4, the control unit **140** may divide sections according to the size of the voltage **V_Link** of the DC link, and may perform droop control in each section. In FIG. 2, the horizontal axis represents the voltage **V_Link** of the DC link, and the vertical axis represents output power. The output power can be the charging power or the discharging power of the battery **220,** and if it is greater than 0, it means the charging power, and if it is less than 0, it means the discharging power.

Other devices may be connected to the DC link **210,** but independent operation of each device is possible by performing droop control using the voltage of the DC link.

The control unit **140** does not operate the power conversion unit **120** when the voltage of the DC link is within a first section (ideal area). Here, the first section may be a state in which the voltage of the DC link is stable. Another power conversion unit may be connected to the DC link **210,** and the first section of the voltage of the DC link may be a section in which the difference between the power being inputted to the DC link **210** and the power being outputted from the DC link **210** is within a first value. For example, the power input to the DC link **210** may be output from the DC link **210** to another power conversion unit, so that there is no surplus power. In addition, it may be a state in which the power being inputted to the DC link **210** and the power being outputted from the DC link **210** are absent.

Here, the other devices may include a power conversion unit and one end may be connected to a DC link **210,** and the other end may be connected to at least one of a solar power generation unit, a load unit, a grid, and a charging unit.

The solar power generation module **230** may include a solar panel (PV panel) and an optimizer (PV optimizer). The optimizer may perform maximum power point estimation (MPPT) so that the power being outputted from the solar panel becomes the maximum power. The solar panel may include a plurality of cell strings. A solar cell that performs solar power generation may be expressed as a cell string unit in which a plurality of cells is connected in series. A cell string may include at least one cell, and when it includes a plurality of cells, the plurality of cells may be connected in series. The cell string may be a solar cell string including a solar cell. The solar cell string may form a solar panel. The solar panel may also be referred to as a photovoltaic (PV) panel or a solar power generation panel. The solar cell generates power by utilizing the photovoltaic effect, which is solar power generation (PV, Photovoltaic). The photoelectric effect is the emission of electrons when light above a certain frequency strikes a specific metal material. A PN junction is formed using a p-type semiconductor and an n-type semiconductor, and electric power is generated by generating electric current using the electrons being generated by the photoelectric effect. Solar cells are formed using silicon, and the like, and can be formed in the form of wafers. Solar cells are located in fields or on the outer walls or rooftops of buildings where they can receive a lot of sunlight, and generate electric power using sunlight. At this time, the solar cells can be formed as building-integrated photovoltaic (BIPV) formed as an integral part of the building.

Since the amount of power generated from a single solar cell is insufficient to be used in a load or power system, power of an appropriate amount to be used can be generated by connecting multiple solar cells in series instead of a single solar cell to form a solar cell string. A solar cell string can be a basic unit for generating power. A photovoltaic panel can be formed by forming multiple cell strings, which are basic units, into panels. Solar cells have different voltage-current characteristics depending on the amount of sunlight, temperature, and the like, and the maximum power point (MPP) also changes. (Generated power = Voltage × Current) An optimizer optimizes the output power of a cell string so that the solar cell operates at the maximum power point (MPP), which is the operating point where the power of the solar cell is maximized under each condition. Here, the optimizer may include module-level power electronics (MLPE). This is called maximum power point tracking (MPPT), and the efficiency of solar power generation can be improved by using maximum power point tracking. In solar power generation, depending on the characteristics of the relationship between current and voltage and the relationship between voltage and power, the maximum power may be the power when it is about 80% of the maximum voltage, not the maximum voltage. Since this maximum power point continues to change according to the magnitude of the voltage and current being generated by the solar panel, it is necessary to continuously find a point where the maximum power point may occur. That is, in order to pursue the maximum power, not the maximum voltage, the magnitude of the voltage and current may be varied so that the maximum power is achieved. That is, it is possible to reduce the voltage and increase the current in the direction of increasing the power, or to increase the voltage and decrease the current.

The inverter **240** may supply power to the grid **241** or may receive power from the grid **241.** The inverter **240** may be connected to the DC link **210** and may receive DC power from the DC link **210** and convert the DC power into AC power to supply power to the load or the grid **241.** It can supply AC power to a load that requires AC power, and transmit the surplus power to the grid, that is, the system. Alternatively, it may receive AC power from the grid **241,** convert it into DC power, and output it to the DC link **210.** Here, the inverter **240** can include a DC-AC inverter.

The power generated by the photovoltaic module **230** may be transmitted to the DC link **210,** and may be provided to the grid **241** through the inverter **240.**

Power generated from the solar power generation module **230** is transmitted to the DC link **210** and can charge the battery **220** through the power conversion unit **120.** Alternatively, power being inputted from the grid **241** can be transmitted to the DC link **210** through the inverter **240** and can charge the battery **220** through the power conversion unit **120.** In addition, power stored in the battery **220** can be transmitted to the DC link **210** through the power conversion unit **120** and can be provided to the load or the grid **241** through the inverter **240.**

The load can be directly connected to the DC link **210.** Here, the load **250** can be a load that uses DC power. In addition, various devices such as a charging module such as a high-speed battery charger for a vehicle, a switching mode power supply (SMPS), and the like may be connected to the DC link.

As described above, the control unit **140** can control the power conversion unit **120** by using the voltage of the DC link rather than information about other power conversion units or devices being connected correspondingly in a configuration in which multiple devices are connected in parallel.

In the first section (ideal area) of FIG. 4, power being outputted from a solar power generation module **230** and transmitted to a DC link **210** is provided to a grid **241** through an inverter **240** so that the voltage of the DC link is in a stable state, and at this time, the control unit **140** can prevent the power conversion unit **120** from operating.

The control unit **140** can operate the power conversion unit **120** to discharge the battery **220** in a second section (discharging area) where the voltage of the DC link is lower than the first section, and can operate the power conversion unit **120** to charge the battery **220** in a third section (charging area) where the voltage of the DC link is higher than the first section.

The power conversion unit of the solar power generation module **230,** the inverter **240,** and the load **250** can also be droop-controlled according to the voltage of the DC link **210.** That is, even if there are many devices being connected to the DC link, the power conversion units of each device can be independently operated through droop control according to the voltage of the DC link. When there are many devices connected to the DC link and the control is performed based on communication, the charging and discharging of the energy storage unit can be determined according to the power generation and output of the connected PV module, inverter module, and charger module, and the time for receiving the corresponding data through communication can be lengthened in proportion to the number of devices connected in parallel. That is, as the number of connected devices increases, the control cycle can become longer and the control can become more complicated.

By using the point that the change in power of each device causes a change in the voltage of the DC link, it is possible to operate independently without transmitting or receiving information through the droop control according to the voltage of the DC link.

If the condition that the power output amount obtained by subtracting the power output amount of the DC-AC inverter and the DCDC power output amount of the charger from the power generation amount of the PV module and the DC-DC power charging and discharging amount of the battery are equal is satisfied, there will be no fluctuation in the voltage of the DC link. That is, if the power generation amount and the consumption amount are the same, the voltage of the DC link is maintained constant. At this time, a decrease in the voltage of the DC link means that the consumption amount is greater than the power generation amount, and a rise in the voltage of the DC link means that the power generation amount is greater than the power consumption, and droop control detects the change in the power of each component through the change in the voltage of the DC link and takes the necessary measures (determining the operation of each component). Through such droop control, power control is possible regardless of the parallel number of connected products, and the operation is simple and quick load response is possible even in standalone operation due to droop control according to the voltage of the DC link.

During droop control, the output power of each device changes in a step form according to the voltage of the link end, which may cause voltage ripple. In the case of various inverters applied with small cap, if the current command is changed in a step form according to the feedback voltage difference compared to the reference voltage, there is a possibility that link end ringing may occur or the voltage may diverge, making stable operation difficult.

A control unit **140** of a power conversion device **100** according to an embodiment of the present invention compares the voltage of a DC link with a reference voltage, controls the power conversion unit **120** using the difference between the voltage of the DC link and the reference voltage, and adjusts the reference voltage using the current of the DC link according to the operation of the power conversion unit **120,** so that other devices connected to the DC link **210** operate according to the adjusted reference voltage, thereby preventing voltage ripple of the DC link **210.**

A battery **220** may be connected to the output unit **130,** and the control unit **140** may control the power conversion unit **120** to charge or discharge the battery **220.** Here, the control unit **140** may calculate the amount of power to charge or discharge the battery by using the difference between the voltage of the DC link and the reference voltage. At this time, if all the calculated amount of power is reflected, the operating range may be exceeded due to a sudden operation. In order to prevent a risk of failure, and the like occurring due to this, the control unit **140** may limit the operation of the power conversion unit **120** within a predetermined power range. For example, it may be limited to a range of 0.3 to 0.95 among the entire operating range.

The control unit **140** can adjust the reference voltage when the voltage or current of the DC link changes according to changes in the charging power or discharging power of devices connected to the DC link.

When the voltage of the DC link **210** deviates from the ideal section, and the like, the first section of FIG. 4, and a change in power occurs, the control unit **140** may not operate directly using the voltage of the DC link **210,** but may compare the voltage of the DC link **210** with a reference voltage. The initial reference voltage may be set to a voltage in a state where the devices connected to the DC link are not charged or discharged. For example, the initial reference voltage may be set to 420 V in FIG. 4. By comparing the voltage of the DC link **210** with the reference voltage and using the difference between the two values, the power to charge or discharge the battery **220** through the power conversion unit **120** may be calculated. Accordingly, the power conversion unit **120** is controlled, and the power conversion unit **120** may receive power from the DC link **210** during a charging operation, and supply power to the DC link **210** during a discharging operation. Due to this, the DC link current can change, and the reference voltage used to control the power conversion unit **120** using the DC link current can be adjusted.

The control unit **140** can repeat the adjustment of the reference voltage until the difference between the voltage of the DC link and the reference voltage becomes 0 or within a predetermined range. The power supplied to the DC link **210** or consumed from the DC link **210** by the operation of the power conversion unit **120** charges or discharges the battery **220,** and thus the voltage of the DC link may change. In the process, the process of controlling the power conversion unit **120** and adjusting the reference voltage can be repeated until the reference voltage adjusted by reflecting the current of the link end and the voltage of the link end become the same. Since the voltage changed by the surge returns to its original position within a short time, the adjustment of the reference voltage can be completed quickly. Alternatively, when power is continuously inputted or outputted to the DC link **210,** the adjustment of the reference voltage is repeated until the voltage of the DC link and the reference voltage become the same, and when the voltage of the DC link and the reference voltage become the same, it operates stably accordingly. Even if the difference between the voltage at the DC link and the reference voltage is not 0, the reference voltage adjustment process can be repeated until it falls within a certain range, for example, within the error range.

By repeating the process of adjusting the reference voltage, it is possible to prevent ripples from occurring due to abrupt reflection of changes in power at the DC link, and to ensure stable operation by following the voltage according to changes in power at the DC link.

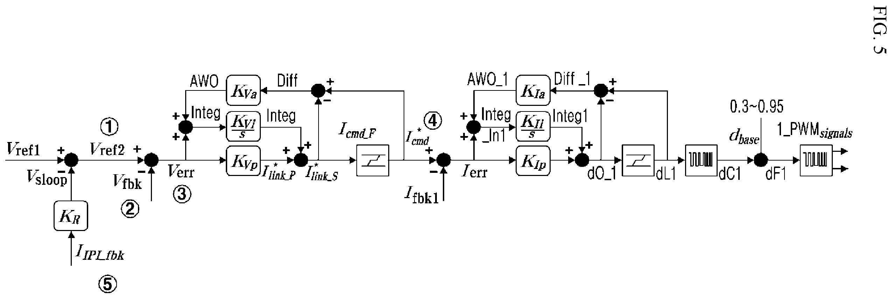

The process of adjusting the reference voltage according to the change in power input or output to the DC link **210** can be performed through the process of FIGS. 5 to 11.

The control unit **140** can operate through the process of FIG. 5. First, **V_ref1** is the initial reference voltage, and when the voltage of the DC link changes according to the power change of the DC link **210,** the reference voltage **V_ref2** and the DC link voltage **V_fdk** can be compared to calculate the difference **V_err.** The reference voltage is not yet adjusted, and at this time, **V_ref1** and **V_ref2** have the same value.

Thereafter, the reference current **I_layer** is calculated using the difference **V_err** between the DC link voltage and the reference voltage. Here, **I_cmd** can be referred to as **I_ref.** Accordingly, the power to control the power conversion unit **120** can be calculated, and the PWM signal to control the power conversion unit **120** can be generated accordingly. At this time, the power change amount can be limited to 0.3 to 0.95 through the filter. When the power conversion unit **120** operates using the generated PWM signal and the DC link current flows, the inverter current **I_iPI_fbk (I_inv)** current is used to reflect it in the reference voltage **V_ref1,** and the reference voltage is adjusted to **V_ref2.**

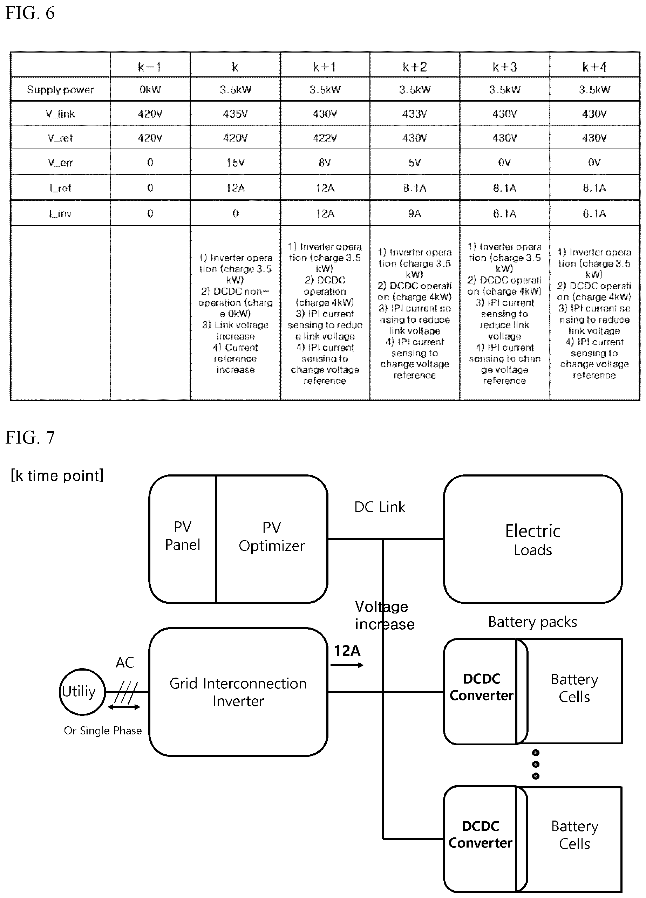

Through a process in which the reference voltage is adjusted and repeated, the value at each time point can be adjusted or changed as in FIG. 6, and at this time, changes between each configuration can be accomplished as in FIGS. 7 to 11.

First, at time point **k-1** when the power supplied to the DC link **210** is stable at 0 kW, the DC link voltage **V_link** and the reference voltage **V_ref** can be the initial reference voltage of 420 V.

At this time, when 3.5 kW is supplied from the inverter **240** to the DC link **210** at time point **k,** the DC link voltage increases from 420 V to 435 V, and 12 A is applied as the DC link current, as shown in FIG. 7. In addition, the difference between the DC link voltage and the reference voltage, **V_err,** becomes 15 V. The power conversion unit **120** is not yet operating.

Thereafter, the reference voltage is adjusted using the difference between the DC link voltage and the reference voltage. At time point **k+1,** the power conversion unit **120** is operated by the control unit **140** to charge the battery **220** at 4 kW, and 12 A is applied to the power conversion device **100** by the operation of the power conversion unit **120,** so that the DC link voltage drops to 430 V and the reference voltage rises to 422 V, so that the difference between the DC link voltage and the reference voltage, **V_err,** becomes 8 V.

Thereafter, since there is still a difference between the DC link voltage and the reference voltage, the adjustment of the reference voltage is repeated. At time point **k+2,** the drop in the DC link voltage is reflected, so the current input to the DC link becomes 8.1 A, and the current supplied to the power conversion device increases from 12 A to 9 A, so the DC link voltage becomes 433 V again, the reference voltage increases to 430 V, and so the difference between the DC link voltage and the reference voltage, **V_err,** is reduced to 5 V.

Since there is still a difference between the DC link voltage and the reference voltage, the adjustment of the reference voltage is repeated. At time point **k+3,** the drop in the DC link voltage is reflected, so the current being inputted to the DC link becomes 8.1 A, and the current supplied to the power conversion device increases from 9 A to 8.1 A, so the DC link voltage becomes 430 V, which is the same as the reference voltage of 430 V, and so the difference between the DC link voltage and the reference voltage, **V_err,** becomes 0 V.

At time point **k+3,** the DC link voltage and the reference voltage become the same, so the final reference voltage becomes 430 V, and the power conversion device 100 operates accordingly. If there is a change in the input power of the DC link **210,** the above process is repeated to track the voltage of the DC link **210.** In the process, the voltage of the DC link, which had increased, is lowered to a stable voltage, and the reference voltage is also adjusted to be the same as the voltage of the DC link.

Through this, the voltage of the DC link can perform stable droop control. In addition, since the link voltage is tracked according to the droop curve according to the power consumed (supplied) by the inverter, and the like, parallel operation with other power conversion devices is possible.

Devices connected to the DC link **210** operate in droop control in which power is controlled according to the voltage of the DC link, and the reference voltage may be an input of a droop control curve of the droop control. The reference voltage may be the same for each device or may be applied individually. Devices connected to the DC link **210** may be droop controlled using the reference voltage adjusted by the control unit **140,** or may be droop controlled using the voltage of the DC link **210** as the reference voltage.

A solar power generation system according to an embodiment of the present invention includes a DC link **210,** a solar power generation module **230** connected to the DC link **210,** an inverter **240** connected between the DC link **210** and a grid **241,** and one or more DC-DC converters **101** and **102** connected between the DC link **210** and a battery **220,** wherein the devices connected to the DC link **210** operate in droop control in which power is controlled according to a reference voltage, and the DC-DC converters **101** and **102** compare the voltage of the DC link with a reference voltage when power of any one of the devices connected to the DC link **210** changes, charge or discharge the battery using the difference between the voltage of the DC link and the reference voltage, and adjust the reference voltage using the current of the DC link according to charging/discharging of the battery. The DC-DC converter **101** and **102** can repeat adjustment of the reference voltage until the difference between the voltage of the DC link and the reference voltage becomes 0 or within a predetermined range.

A detailed description of each component of the solar power generation system in the embodiment of the present invention corresponds to the detailed description of the power conversion device of FIGS. 1 to 11, and any duplicate description will be omitted below.

When multiple DC-DC converters are connected, they can share and handle the changes in power supplied to the DC link, so the size of the change in power that can be handled can increase and it can be stabilized more quickly.

Meanwhile, the embodiments of the present invention can be implemented as computer readable codes on a computer readable recording medium. The computer readable recording medium includes all types of recording devices in which data readable by a computer system is stored.

As for examples of computer readable recording media, there are ROM, RAM, CD-ROM, magnetic tape, floppy disk, and optical data storage device; in addition, the computer readable recording medium is distributed over networked computer systems; and computer readable code can be stored and executed in a distributed manner. In addition, functional programs, codes, and code segments for implementing the present invention can be easily inferred by programmers in the technical field to which the present invention belongs.

Those skilled in the art related to the present embodiment will be able to understand that it may be implemented in a modified form within a range that does not deviate from the essential characteristics of the above description. Therefore, the disclosed methods are to be considered in an illustrative rather than a limiting sense. The scope of the present invention is shown in the claims rather than the foregoing description, and all differences within the equivalent scope shall be construed as being included in the present invention.

## Claims

1. A power conversion device comprising:
an input unit connected to a DC link, and which receives voltage and current of the DC link;
a power conversion unit configured to convert the voltage of the DC link;
an output unit outputting the converted voltage; and
a control unit configured to compare the voltage of the DC link to a reference voltage, control the power conversion unit using a difference between the voltage of the DC link and the reference voltage, and adjust the reference voltage using the current of the DC link according to operation of the power conversion unit.

2. The power conversion device according to claim 1,
wherein the control unit repeats adjustment of the reference voltage until the difference between the voltage of the DC link and the reference voltage becomes 0 or within a predetermined range.

3. The power conversion device according to claim 1,
wherein devices connected to the DC link operate in droop control in which power is controlled according to the voltage of the DC link, and
wherein the reference voltage is an input of a droop control curve of the droop control.

4. The power conversion device according to claim 1,
wherein the output unit is connected to a battery, and
wherein the control unit controls the power conversion unit to charge or discharge the battery.

5. The power conversion device according to claim 4,
wherein the control unit calculates an amount of power to charge or discharge the battery by using the difference between the voltage of the DC link and the reference voltage.

6. The power conversion device according to claim 1,
wherein the control unit limits the operation of the power conversion unit within a predetermined power range.

7. The power conversion device according to claim 1,
wherein an initial reference voltage is set to a voltage at which devices connected to the DC link are neither charged nor discharged.

8. The power conversion device according to claim 1,
wherein the control unit adjusts the reference voltage when the voltage or current of the DC link changes according to changes in the charging power or discharging power of devices connected to the DC link.

9. A solar power generation system comprising:
a DC link;
a solar power generation module connected to the DC link; an inverter connected between the DC link and a grid; and one or more DC-DC converters connected between the DC link and a battery,
wherein devices connected to the DC link operate in droop control in which power is controlled according to a reference voltage, and
wherein the DC-DC converter compares voltage of the DC link with a reference voltage when power of any one of the devices connected to the DC link changes, charges or discharges the battery using a difference between the voltage of the DC link and the reference voltage, and adjusts the reference voltage using a current of the DC link according to charging/discharging of the battery

10. The solar power generation system according to claim 9,
wherein the DC-DC converter repeats adjustment of the reference voltage until the difference between the voltage of the DC link and the reference voltage becomes 0 or within a predetermined range.
